# EUROPEAN PATENT APPLICATION

(11) **EP 3 869 336 A1**
(43) Date of publication of application: **25.08.2021**
(21) Application number: 21161072.0
(22) Date of filing: 05.03.2021
(51) Int. Cl.: G06F 9/50

(54) **METHOD AND APPARATUS FOR PROCESSING DEVELOPMENT MACHINE OPERATION TASK, DEVICE AND STORAGE MEDIUM**

(30) Priority: 30.09.2020 CN 202011058788
(71) Applicant: BEIJING BAIDU NETCOM SCIENCE TECHNOLOGY CO., LTD., No.10 Shangdi 10th Street Haidian District Beijing 100085 (CN)
(72) Inventor: LUO, Baotong, Haidian District, Beijing (CN); ZHANG, Henghua, Haidian District, Beijing (CN); HU, Zaibin, Haidian District, Beijing (CN); HUANG, Kaiwen, Haidian District, Beijing (CN); MENG, Kai, Haidian District, Beijing (CN); SU, Weijiang, Haidian District, Beijing (CN); ZHAI, Xiaoyu, Haidian District, Beijing (CN); LI, Panpan, Haidian District, Beijing (CN); LI, Zhenguo, Haidian District, Beijing (CN)
(74) Representative: J A Kemp LLP

(57) **Abstract**

The present application discloses a method and an apparatus for processing a development machine operation task, a device and a storage medium, and relates to the field of deep learning of artificial intelligence. The specific implementation solution is: receiving a task creating request initiated by a client; generating, according to the task creating request, the development machine operation task; allocating a target graphics processing unit (GPU) required for executing the development machine operation task for the development machine operation task; and sending a development machine operation task request to a master node in cluster nodes, where the task request is used to request executing the development machine operation task on the target GPU. Compared with the prior art, the present application can directly use an operating system of a local host by using a docker container to execute the development machine operation task on the GPU, thereby improving the utilization rate of the hardware of a physical machine.

## Description

### TECHNICAL FIELD

The present application relates to the field of deep learning of artificial intelligence in data processing and, in particular, to a method and an apparatus for processing a development machine operation task, a device and a storage medium.

### BACKGROUND

Since the concept of the deep learning was put forward, deep learning has made great progress in both theory and application. Existing deep learning training tasks are all running on high performance graphics processing unit (graphics processing unit, GPU) clusters. In order to obtain the goal of consistent development environment and training environment, most developers also use a GPU development machine for development and debugging.

A current mainstream method of a development machine is to establish an abstract virtualization platform between a computer, storage and network hardware through platform virtualization technology, so that all the hardware of the physical machine is unified into a virtualization layer. A virtual machine is created on top of the virtualization platform, which has the same hardware structure as that of a physical machine. Developers can perform a development machine operation task on the virtual machine. Since there is no interference between the virtual machines, protection of system resources can be achieved.

However, the virtual machine needs to encapsulate a real hardware layer of the physical machine. In addition, virtualization will inevitably occupy some resources of the physical machine, resulting in losing a part of performance of the physical machine, thereby causing that the utilization rate of hardware of the physical machine is low.

### SUMMARY

The present application provides a method and an apparatus for processing a development machine operation task, a device and a storage medium for a development machine operation task.

According to a first aspect of the present application, provided is a method for processing a development machine operation task, which includes:
receiving a task creating request initiated by a client;
generating, according to the task creating request, a development machine operation task;
allocating a target GPU required for executing the development machine operation task to the development machine operation task; and
sending a development machine operation task request to a master node in cluster nodes, where the task request is used to request executing the development machine operation task on the target GPU.

According to a second aspect of the present application, provided is a method for processing a development machine operation task, which includes:
receiving a development machine operation task request sent by a task management server, where the task request is used to request executing the development machine operation task on the target GPU;
determining a target working node according to operating status of multiple working nodes in cluster nodes; and
scheduling a docker container of the target working node to execute the development machine operation task on the target GPU.

According to a third aspect of the present application, provided is an apparatus for processing a development machine operation task, which includes:
a receiving module, configured to receive a task creating request initiated by a client;
a processing module, configured to generate, according to the task creating request, a development machine operation task; and allocate a target GPU required for executing the development machine operation task to the development machine operation task; and
a sending module, configured to send a development machine operation task request to a master node in cluster nodes, where the task request is used to request the executing the development machine operation task on a target GPU.

According to a fourth aspect of the present application, provided is an apparatus for processing a development machine operation task, which includes:
a receiving module, configured to receive a development machine operation task request sent by a task management server, where the task request is used to request executing the development machine operation task on the target GPU; and
a processing module, configured to determine a target working node according to the operating status of multiple working nodes in cluster nodes; and schedule a docker container of the target working node to execute the development machine operation task on the target GPU.

According to a fifth aspect of the present application, provided is an electronic device, which includes:
at least one processor; and
a memory communicatively connected with the at least one processor; where,
the memory stores instructions thereon, which are executed by the at least one processor, and the instructions, when executed by the at least one processor, cause the at least one processor to execute the method according to the first aspect.

According to a sixth aspect of the present application, provided is a non-transitory computer-readable storage medium storing computer instructions for causing the computer to execute the method according to the first aspect.

According to a seventh aspect of the present application, provided is a computer program product, where the program product includes: a computer program, the computer program is stored in a readable storage medium, at least one processor of the electronic device can read the computer program from the readable storage medium, and the at least one processor executes the computer program such that the electronic device executes the method described in the first and second aspects.

The technology according to the present application solves the problem of low utilization rate of the hardware of the physical machine. Compared with the prior art, the present application uses the docker container to execute the development machine operation task on the graphics processing unit (GPU), so that the operating system of a local host can be directly used, thereby improving the hardware utilization rate of the physical machine.

It should be understood that the content described herein is not intended to identify the key or important features of the embodiments of the present application, nor is it intended to limit the scope of the present application. Other features of the present application will be easily understood through the following description.

### BRIEF DESCRIPTION OF THE DRAWINGS

The accompanying drawings are used for better understanding of the solution, and do not constitute a limitation to the present application. Where,
FIG. 1 is a scenario schematic diagram of a method for processing a development machine operation task provided by an embodiment of the present application;
FIG. 2 is a system architecture diagram of a development machine operation task provided by an embodiment of the present application;
FIG. 3 is a signaling interaction diagram of a method for processing a development machine operation task provided by an embodiment of the present application;
FIG. 4 is a schematic flowchart of a method for processing a development machine operation task provided by an embodiment of the present application;
FIG. 5 is a schematic flowchart of another method for processing a development machine operation task provided by an embodiment of the present application;
FIG. 6 is a schematic structural diagram of an apparatus for processing a development machine operation task provided by an embodiment of the present application;
FIG. 7 is a schematic structural diagram of another apparatus for processing a development machine operation task provided by an embodiment of the present application; and
FIG. 8 is a block diagram of an electronic device that can implement the method for processing a development machine operation task according to the embodiment of the present application.

### DESCRIPTION OF EMBODIMENTS

Exemplary embodiments of the present application are described below with reference to the accompanying drawings, which include various details of the embodiments of the present application to facilitate understanding, and should be considered as merely exemplary. Therefore, those of ordinary skilled in the art should recognize that various changes and modifications can be made to the embodiments described herein without departing from the scope and spirit of the present application. Likewise, for clarity and conciseness, descriptions of well-known functions and structures are omitted in the following description.

A current mainstream method of a development machine is to establish an abstract virtualization platform between a computer, a storage and network hardware through platform virtualization technology, so that all the hardware of the physical machine is unified into a virtualization layer. A virtual machine is created on top of the virtualization platform, which has the same hardware structure as that of a physical machine. Developers can perform a development operation task on the virtual machine. Since there is no interference between the virtual machine, protection of system resources can be achieved.

However, the virtual machine needs to encapsulate a real hardware layer of the physical machine. In addition, virtualization will inevitably occupy some resources of the physical machine, resulting in losing a part of performance of the physical machine, thereby causing that the utilization rate of hardware of the physical machine is low. The present application provides a method and an apparatus for processing a development machine operation task, which are applied to the field of deep learning of artificial intelligence in data processing, to solve the technical problem of low utilization rate of the hardware of the physical machine and achieve the effect of improving the utilization rate of the hardware of the physical machine. The inventive idea of the present application is: by allocating the target GPU required for executing the development machine operation task to the development machine operation task, and then sending the development machine operation task request to the master node in the cluster nodes, the docker container of the target work node is scheduled by the master node to execute the development machine operation task on the target GPU.

The terms involved in the present application are explained below to clearly understand the technical solution of the present application:
development machine: a software program which is provided to developers, obtains software code through its own code during software development process and compiles and debugs the obtained code.

Docker container: an open source application container engine which enables developers to package applications and dependency packages in a portable container in a unified way, and then publishes them to any server installed a docker engine.

Snapshot: a completely usable copy of a specified data set, which includes an image of the corresponding data at a certain point in time.

Block device: it is a kind of input and output (in/out, I/O) device used to store information in a fixed-size block.

The application scenario of the present application is described below.

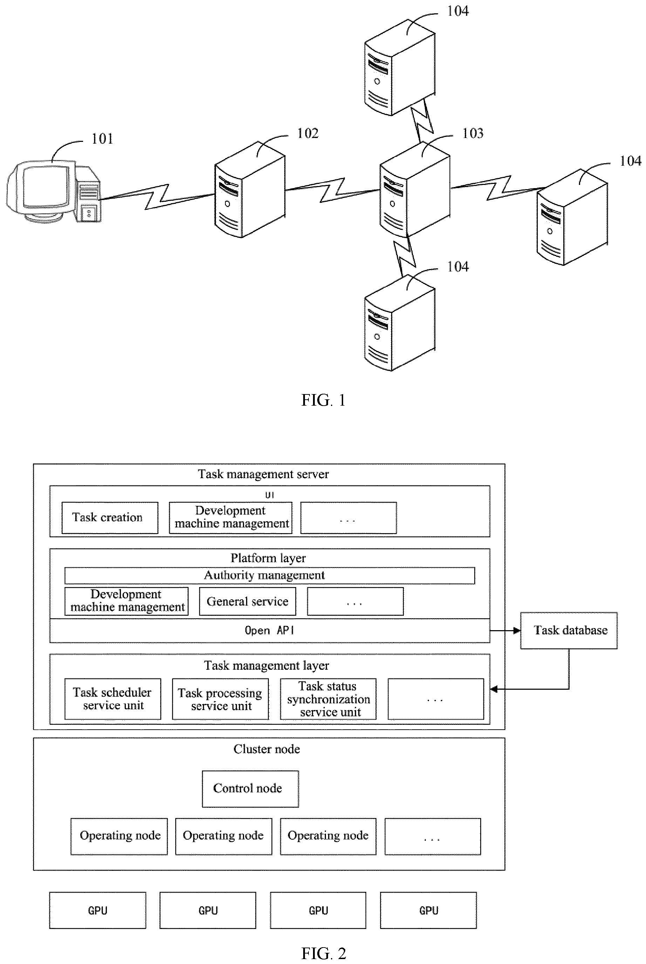

FIG. 1 is a scenario schematic diagram of a method for processing a development machine operation task provided by an embodiment of the present application. As shown in FIG. 1, when a user needs to execute the development machine operation task such as development machine creation, development machine deletion, etc., the client 101 can send a task creating request to the task management server 102 of the task processing system of development machine. After receiving the task creating request sent by the client 101, the task management server 102 allocates the GPU required for executing the development machine operation task for the development machine operation task in the task creating request, and then sends the development machine operation task request to the master node 103 in the cluster nodes. The master node 103 schedules the docker container of the working node 104 to execute the development machine operation task on the target GPU.

Where the client 101 may include, but is not limited to: a tablet computer, a personal computer (personal computer, PC), a notebook computer, a personal digital assistant (personal digital assistant, PDA), a mobile phone and other devices.

It should be noted that the application scenario of the technical solution of the present application may be the scenario of processing a development machine operation task in FIG. 1, but is not limited to this, and may also be applied to other related scenarios.

FIG. 2 is a system architecture diagram of a development machine operation task provided by an embodiment of the present application. FIG. 2 shows a client, a task management server, cluster nodes, GPU and a task database. The above client includes a UI interface and a platform layer, and the user operates on the UI interface to trigger a module in the platform layer to send a task creating request to the task database through Open API. After receiving the task creating request, the task database sends the task creating request to the task management server. The task management server includes multiple service units. The task management server is used to process the task creating request and send the development machine operation task request to the master node in the cluster nodes. After receiving the development machine operation task request, the master node in the cluster nodes schedules the docker container of the target worker node to execute the development machine operation task on the target GPU.

It can be understood that the above method for processing a development machine operation task can be implemented by the apparatus for processing a development machine operation task provided in the embodiment of the present application. The apparatus for processing a development machine operation task can be part or all of a certain device, for example, it can be the task management server and the cluster master node described above.

Hereinafter, the task management server and the cluster master node integrated or installed with relevant execution code are taken as an example, and the technical solutions of the embodiments of the present application are described in detail with specific embodiments. The following specific embodiments can be combined with each other, and the same or similar concepts or processes may not be repeated in some embodiments.

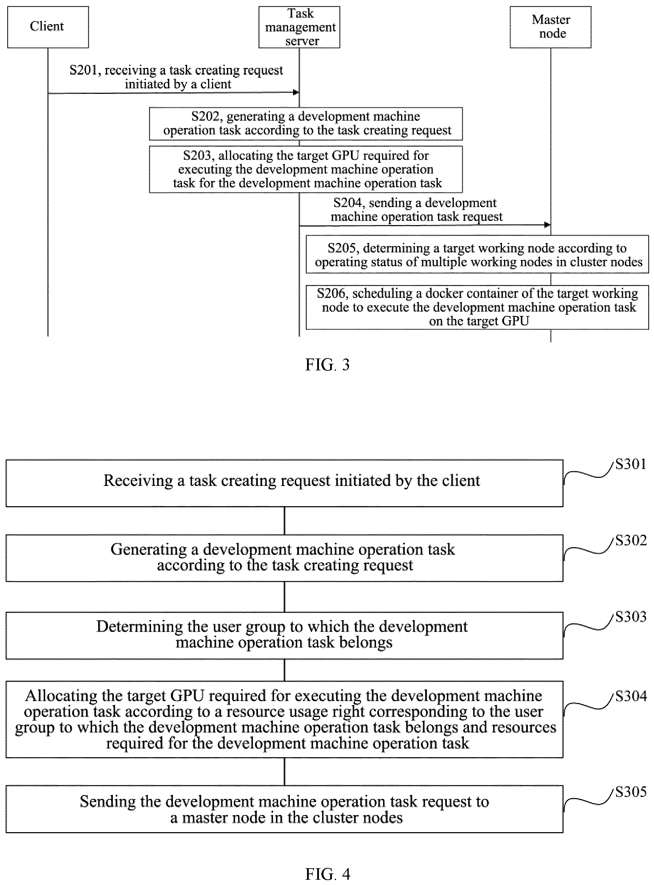

FIG. 3 is a signaling interaction diagram of a method for processing a development machine operation task provided by an embodiment of the present application. The present application relates to how to process the development machine operation task. And as shown in FIG. 3, the method includes:
S201, the task management server receives a task creating request initiated by a client.

Where the development machine operation task includes at least one of the following: creating a development machine, deleting a development machine, restarting a development machine, and reinstalling a development machine.

In the present application, when the user needs to operate the development machine, the client may be operated to send a task creating request therefrom. In some embodiments, the client can directly send a task creating request to the task management server. In other embodiments, the client may firstly send a task creating request to the task database. Subsequently, the task database sends the task creating request to the task management server.

S202, the task management server generates a development machine operation task according to the task creating request.

In this step, after receiving the task creating request initiated by the client, the task management server can generate the development machine operation task according to the task creating request.

The embodiment of the present application does not limit how to generate the development machine operation task. Exemplarily, the task creating request may include task requirement data input by the user. The task management server can generate the development machine operation task according to the task requirement data input by the user.

In the present application, after generating the development machine operation task, the task management server can add the development machine operation task into the task queue.

It should be understood that the embodiment of the present application does not limit how to add a development machine operation task to the task queue. In some embodiments, the task scheduler service unit in the task management server can schedule the development machine operation task, and then add the development machine operation task to the corresponding task queue based on the type of the development machine operation task.

S203, the task management server allocates a target GPU required for executing the development machine operation task for the development machine operation task.

In some embodiments, the task management server may allocate the target GPU required for executing the operation task according to the resources required by the development machine operation task.

In other embodiments, the operating status of GPUs in the cluster can also be used as a basis for determining the target GPU. For the GPU that is executing a task or a failed GPU, the task management server can avoid using them as the target GPU.

It should be understood that in the process of determining the target GPU, the task management server may also verify the user right. Exemplarily, the task management server can determine a user group to which the development machine operation task belongs, and different user groups correspond to different resource usage rights. Subsequently, the task management server can allocate the target GPU required for executing the operation task according to the resource usage right corresponding to the user group to which the development machine operation task belongs and the resources required for the development machine operation task.

It should be understood that the user group is not directly bound to the user, that is, the right cannot be granted to the user included in this user group by granting a user to the user group. In the present application, a management module of the system can determine the user right by searching the preset entity table and association table. Where the entity table may include a permission table, a role table, an user table and an user group table, etc., and the association table may include a user-user group association table, a role-user group association table, and permission-role association table, etc.

In the present application, by setting different resource usage rights for different user groups, the target GPU required for executing the development machine operation task can be allocated according to the resource usage right corresponding to the user group, thereby achieving the reasonable management and control of the resources that can be used by the user group.

In other embodiments, the task creating request also includes a resource quota required for executing the development machine operation task. Correspondingly, after determining the resource usage quota of the user group to which the development machine operation task belongs, the task management server can compare the resource quota required for the development machine operation task with the resource usage quota of the user group. If the resource usage quota of the user group is greater than or equal to the amount of the resources required for the development machine operation task, the target GPU required for executing the operation task is allocated. If the resource usage quota of the user group is less than the amount of resources required for the development machine operation task, an error message will be sent to the client. Correspondingly, after completing the development machine operation task, the task management server may subtract the amount of resources required for the development machine operation task from the resource usage quota of the user group.

In the present application, by setting the resource usage quota for the user group, the user group can only use the amount of resources less than or equal to the resource usage quota in a period of time to execute the development machine operation task, thereby avoiding excessive use of the resources by the user group.

It should be understood that the user group administrator can also schedule an open application programming interface (open application programming interface, Open Api) to determine the resource quota of the user group, thereby limiting the resources that the user group can use.

In some embodiments, for the development machines with low GPU utilization, the system management module can also report and even release resources according to the utilization rate of the GPU.

Exemplarily, the task management server may query the resource utilization rate of the target GPU by the development machine operation task in the task database. If the utilization rate of the GPU resource by the development machine operation task is lower than a first threshold, the task management server sends a release task instruction to the master node, and the release task instruction releases the development machine operation task on the target GPU.

In some embodiments, for the development machine with a high GPU utilization rate, the task management server may also re-allocate the target GPU for the development machine operation task.

Exemplarily, the task management server can query the resource utilization rate of the target GPU in the task database. If the resource utilization rate of the target GPU is greater than a second threshold, the target GPU is re-allocated for the development machine operation task, and the development machine operation task request is sent to the master node based on the re-allocated GPU.

In the present application, upon the above methods, the task management server can efficiently manage the development machine operation task, user groups, etc., and there is no need for the developers to manually deal with the operation and maintenance of the development machine.

S204, the task management server sends a development machine operation task request to a master node in cluster nodes, where the task request is used to request executing the development machine operation task on the target GPU.

In the present application, after the task management server allocates the target graphics processing unit (GPU) required for executing the development machine operation task for the development machine operation task, the development machine operation task request can be sent to the master node in the cluster nodes, thereby executing the development machine operation task on the target GPU.

It should be understood that the embodiment of the present application does not limit how to send the development machine operation task request to the master node in the cluster nodes. In some embodiments, the development machine operation task can be sent to the master node through a task worker service unit.

Where the architecture between the cluster nodes can be specifically Kubernetes (K8S) architecture.

The K8S architecture is explained below. The K8S architecture can divide the GPU into a master node (K8S Master) and a cluster of working nodes, the master node is responsible for maintaining the target status of the cluster and running a set of processes related to cluster management, such as kube-apiserver, controller-manager, and scheduler. The above process can implement cluster resource management and Pod (a programming language) scheduling on the working node. Where worker nodes run real applications, the smallest running unit pod managed by the K8S, and kubelet and kube-proxy processes on the worker nodes. The Kubelet and kube-proxy processes are responsible for pod creation, startup, monitoring, restart, destruction, as well as the discovery and load balancing of services in the cluster.

In some optional implementations, after sending the development machine operation task request to the master node in the cluster nodes, the task management server can also update the snapshot of the development machine corresponding to the development machine operation task, and the snapshot is the logical relationship between the data of development machine.

It should be noted that the update of snapshot of development machine may include the snapshot creation of development machine and the snapshot deletion of development machine. The update of the snapshot of development machine can be done specifically through the task worker service unit.

In some optional implementations, after sending the development machine operation task request to the master node in the cluster nodes, the task management server can also determine the block device required by the development machine operation, and the block device is used to request storage resources for the development machine operation task.

The update of the block device required for the development machine operation task can also be done through the task status sync service unit in the task management module.

In addition, the task status sync service unit can also monitor cluster nodes.

S205, the master node determines a target working node according to operating status of multiple working nodes in cluster nodes.

The embodiment of the present application does not limit how the master node determines the target working node according to the operating status of multiple working nodes in the cluster nodes.

Exemplarily, the master node may firstly determine the operating status of the working node that meets the requirements, and then select the target working node therefrom. Exemplarily, the master node may firstly determine the failed working node, and then determine the target working node from the working nodes other than the failed working node.

S206, the master node schedules a docker container of the target working node to execute the development machine operation task on the target GPU.

In this step, after the master node determines the target worker node according to the operating status of the multiple worker nodes in the cluster nodes, the docker container of the target worker node can be scheduled to execute the development machine operation task on the target GPU.

In some embodiments, the master node can also monitor the execution progress of the development machine operation task of the target working node and the state of the development machine corresponding to the development machine operation task, and send the execution progress of the development machine operation task and the state of the development machine corresponding to the development machine operation task to the task database.

In some embodiments, the master node may also monitor the resource utilization rate of the target GPU by the development machine operation task, and send the resource utilization rate of the target GPU to the task database.

In some embodiments, the master node also stores the operating environment and operating data of the development machine corresponding to the development machine operation task on a backup server by means of remote mounting. When the target GPU fails, by executing backup to the operating environment and operating data of the development machine stored in the server, the development machine can be quickly recovered on other GPUs and the development machine operation task is executed sequentially.

It should be understood that when the master node schedules the docker container of the target worker node to execute the development machine operation task, the operating system of the local host can be directly used, so that its utilization rate of system resources would be higher, application execution speed would be faster, memory consumption would be lower and file storage speed would be faster. At the same time, the use of docker container only occupies MB-level disk, which occupies less physical machine resources compared with the GB-level disk occupation of the virtual machine, and the number supporting by a single machine can reach thousands.

It should be understood that since the docker container application runs directly on a host kernel, there is no need to start a complete operating system, compared to the virtual machine in the prior art, the containerized management module using the docker container may greatly save operating time of the development machine, and its operating time can be achieved in seconds or even milliseconds.

It should be understood that through the docker image in the snapshot of development machine, a complete runtime environment except the kernel can be provided, so as to ensure environmental consistency. At the same time, the docker image of the application can be customized to solve the problem of complex and difficult deployment of the development machine environment.

It should be understood that while executing the development machine operation task, the containerized management module can also store the running environment and running data of the development machine corresponding to the development machine operation task on the backup server by means of remote mounting. Upon the backup server, if the physical machine in the system for processing a development machine task has problems such as downtime or failure, the development machine instance can be quickly migrated to other physical machine, which ensures data security and reduces, at the same time, the waiting time for the developers due to machine failure.

In the method for processing a development machine operation task provided by the embodiment of the present application, the task management server receives the task creating request initiated by the client, and then generates the development machine operation task according to the task creating request. Secondly, the task management server allocates the target GPU required for executing the development machine operation task for the development machine operation task, sends the development machine operation task request to the master node in the cluster nodes, where the task request is used to request to execute the development machine operation task on the target GPU. Compared with the prior art, the present application can directly use an operating system of the local host by using the docker container to execute the development machine operation task on the GPU, thereby improving the utilization rate of the hardware of the physical machine.

On the basis of the foregoing embodiments, how to allocate the target GPU required for executing the development machine operation task to the development machine operation task is illustrated below. FIG. 4 is a schematic flowchart of a method for processing a development machine operation task provided by an embodiment of the present application, and the method includes:
5301, the task management server receives a task creating request initiated by the client.
S302, the task management server generates a development machine operation task according to the task creating request.

The technical terms, technical effects, technical features, and optional implementations of S301 to S302 can be understood with reference to S201 to S202 shown in FIG. 3, and the repeated contents thereof will not be repeated here.

S303, the task management server determines the user group to which the development machine operation task belongs, where different user groups correspond to different resource usage rights

Exemplarily, the task management server may determine the user group to which the development machine operation task belongs based on the user information logged in by client.

It should be understood that the user group is not directly bound to the user, that is, rights cannot be granted to the user included in this user group by granting a user to the user group. In the present application, the system management module can determine the user rights by searching the preset entity table and association table, where the entity table may include a permission table, a role table, a user table and a user group table, etc., and the association table may include a user-user group association table, a role-user group association table, a permission-role association table, etc.

S304, the task management server allocates the target GPU required for executing the development machine operation task according to a resource usage right corresponding to the user group to which the development machine operation task belongs and resources required for the development machine operation task.

In this step, different user groups correspond to different resource usage rights, and the task management server may determine the target GPU required for the operation task among GPUs with resource usage rights.

S305, the task management server sends the development machine operation task request to a master node in the cluster nodes, where the task request is used to request executing the development machine operation task on the target GPU.

The technical terms, technical effects, technical features, and optional implementations of S305 can be understood with reference to S204 shown in FIG. 3, and the repeated contents thereof will not be described here again.

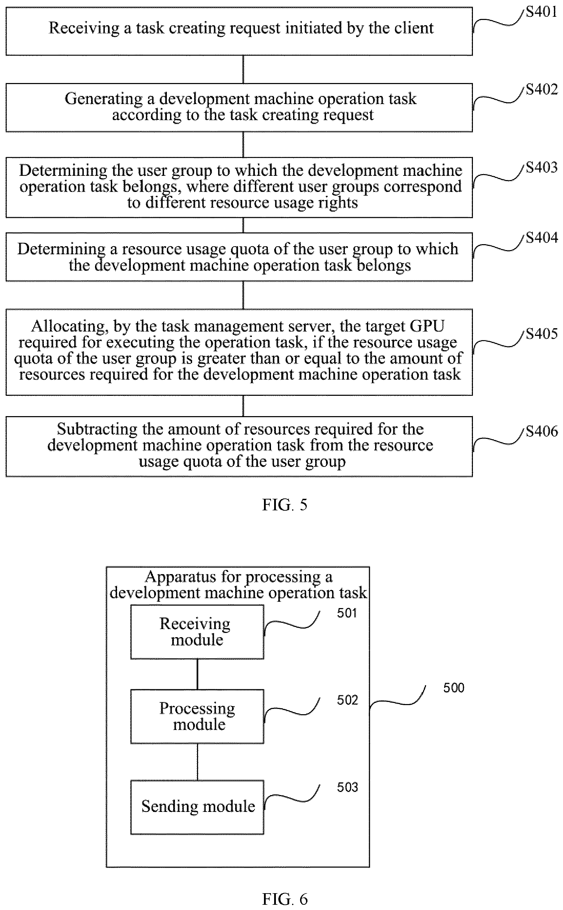

Based on the foregoing embodiment, FIG. 5 is a schematic flowchart of another method for processing a development machine operation task provided by an embodiment of the present application, and the method includes:
S401, the task management server receives a task creating request initiated by the client.
S402, the task management server generates a development machine operation task according to the task creating request.
S403, the task management server determines the user group to which the development machine operation task belongs, where different user groups correspond to different resource usage rights.

The technical terms, technical effects, technical features, and optional implementations of S401 to S402 can be understood with reference to S301 to S302 shown in FIG. 4, and the repeated contents thereof will not be described here again.

S404, the task management server determines a resource quota of the user group to which the development machine operation task belongs.

Where the resource usage quota of the user group can be applied by the user group, and then determined after the administrator agrees. In case of determining the resource usage quota of the user group, every time the user group uses resources, the task management server will subtract the amount of used resources from the resource usage quota of the user group.

S405, the task management server allocates the target GPU required for executing the operation task, if the resource usage quota of the user group is greater than or equal to the amount of resources required for the development machine operation task.

In the present application, after determining the resource usage quota of the user group to which the development machine operation task belongs, the task management server can compare the resource quota required for the development machine operation task with the resource usage quota of the user group. If the resource usage quota of the user group is greater than or equal to the amount of resources required for the development machine operation task, the target GPU required for executing the operation task is allocated. If the resource usage quota of the user group is less than the amount of resources required for the development machine operation task, an error hint will be sent to the client.

S406, the task management server subtracts the amount of resources required for the development machine operation task from the resource usage quota of the user group.

In the method for processing a development machine operation task provided by the embodiment of the present application, the task management server receives the task creating request initiated by the client, and then generates the development machine operation task according to the task creating request. Secondly, the task management server allocates the target GPU required for executing the development machine operation task for the development machine operation task, sends the development machine operation task request to the master node in the cluster nodes, where the task request is used to request to execute the development machine operation task on the target GPU. Compared with the prior art, the present application can directly use an operating system of the local host by using the docker container to execute the development machine operation task on the GPU, thereby improving the utilization rate of the hardware of the physical machine.

Those of ordinary skilled in the art can understand: all or part of the steps of the above method embodiments can be completed by hardware related to program information. The above program can be stored in a computer readable storage medium. When the program is executed, the steps including the above method embodiments are performed; and the foregoing storage medium includes: ROM, RAM, magnetic disk, or optical disk and other media that can store program codes.

FIG. 6 is a schematic structural diagram of an apparatus for processing a development machine operation task provided by an embodiment of the present application. The apparatus for processing a development machine operation task can be implemented by software, hardware or a combination of both. For example, the above task management server or the chip in the task management server is used to execute the above method for processing a development machine operation task. As shown in FIG. 6, the apparatus 500 for processing a development machine operation task includes:
a receiving module 501, configured to receive a task creating request initiated by a client;
a processing module 502, configured to generate a development machine operation task according to the task creating request; and allocate a target GPU required for executing the development machine operation task to the development machine operation task; and
a sending module 503, configured to send a development machine operation task request to a master node in the cluster nodes, where the task request is used to request executing the development machine operation task on a target GPU.

In an optional implementation, the processing module 502 is specifically configured to determine a user group to which the development machine operation task belongs, where different user groups correspond to different resource usage rights; and allocate the target GPU required for executing the operation task according to resource usage rights corresponding to the user group to which the development machine operation task belongs and the resources required for the development machine operation task.

In an optional implementation, the processing module 502 is further configured to determine a resource usage quota of the user group to which the development machine operation task belongs. If the resource usage quota of the user group is greater than or equal to the amount of resources required for the development machine operation task, the target GPU required for executing the operation task is allocated.

In an optional implementation, the processing module 502 is further configured to subtract the amount of resources required for the development machine operation task from the resource usage quota of the user group.

In an optional implementation, the processing module 502 is further configured to query the resource utilization rate of the target GPU by the development machine operation task. If the resource utilization rate of the target GPU by the development machine operation task is lower than a first threshold, the release task instruction is sent to the master node to release the development machine operation task on the target GPU.

In an optional implementation, the processing module 502 is further configured to query a resource utilization rate of the target GPU in the task database; re-allocate the target GPU for the development machine operation task, if the resource utilization rate of the target GPU is greater than a second threshold; and the development machine operation task request is sent to the master node based on a re-allocated GPU.

In an optional implementation, the processing module 502 is further configured to update a snapshot of the development machine corresponding to the development machine operation task, where the snapshot is logical relationship between data of the development machine.

In an optional implementation, the processing module 502 is further configured to determine a block device required by the development machine operation task, where the block device is used to request storage resources for the development machine operation task.

In an optional implementation, the development machine operation task includes at least one of the following: creating the development machine, deleting the development machine, restarting the development machine, and reinstalling the development machine.

The apparatus for processing a development machine operation task provided by the embodiment of the application can execute the action on the task management server side in the method for processing a development machine operation task in the above method embodiments. The implementation principle and technical effects thereof are similar, and will not be repeated here.

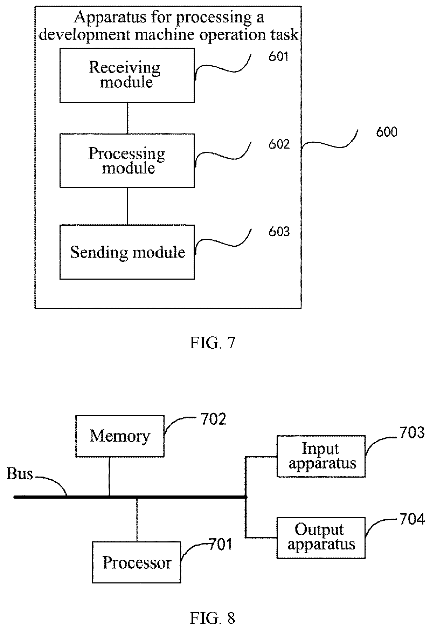

FIG. 7 is a schematic structural diagram of another apparatus for processing a development machine operation task provided by an embodiment of the present application. The apparatus for processing a development machine operation task can be implemented by software, hardware or a combination of both. For example, the above master node or the chip in the master node is used to execute the above method for processing a development machine operation task. As shown in FIG. 7, the apparatus 600 for processing a development machine operation task includes:
a receiving module 601, configured to receive a development machine operation task request sent by a task management server, where the task request is used to request executing the development machine operation task on the target GPU; and
a processing module 602, configured to determine a target working node according to operating status of multiple working nodes in cluster nodes; and schedule a docker container of the target working node to execute the development machine operation task on the target GPU.

In an optional implementation, the processing module 602 is further configured to monitor execution progress of the development machine operation task of the target working node and state of the development machine corresponding to the development machine operation task; and
the apparatus further includes a sending module 603, configured to send the execution progress of the development machine operation task and the state of the development machine corresponding to the development machine operation task to the task database.

In an optional implementation, the processing module 602 is further configured to monitor resource utilization rate of the target GPU by the development machine operation task; and
the sending module 603 is further configured to send the resource utilization rate of the target GPU to the task database.

In an optional implementation, the development machine operation task includes at least one of the following: creating the development machine, deleting the development machine, restarting the development machine, and reinstalling the development machine.

The apparatus for processing a development machine operation task provided by the embodiment of the application can execute the action on the master node side in the method for processing a development machine operation task in the above method embodiments. The implementation principle and technical effects thereof are similar, and will not be repeated here.

According to the embodiments of the present application, the present application also provides an electronic device and a readable storage medium.

As shown in FIG. 8, it is a block diagram of an electronic device that can implement the method for processing a development machine operation task according to the embodiment of the present application. An electronic device is intended to represent various forms of digital computers, such as laptop computers, desktop computers, workstations, personal digital assistants, servers, blade servers, mainframe computers, and other suitable computers. An Electronic device can also represent various forms of mobile apparatuses, such as personal digital processing, cellular phones, smart phones, wearable devices, and other similar computing apparatuses. The components, their connections and relationships, and their functions shown herein are merely examples, and are not intended to limit the implementation of the present application described and/or required herein.

As shown in FIG. 8, the electronic device includes: one or more processors 701, a memory 702, and interfaces for connecting various components, which include a high-speed interface and a low-speed interface. The various components are connected to each other through different buses, and can be installed on a common motherboard or installed in other ways as required. The processor may process instructions executed in the electronic device, which includes instructions stored in or on the memory to display graphical information of the GUI on an external input/output apparatus (such as a display device coupled to an interface). In other implementations, multiple processors and/or multiple buses may be used with multiple memories if necessary. Likewise, multiple electronic devices can be connected, and each of them provides some necessary operations (for example, serving as a server array, a group of blade servers, or a multi-processor system). A processor 701 is taken as an example in FIG. 8.

The memory 702 is a non-transitory computer-readable storage medium provided by the present application, where the memory stores instructions that can be executed by at least one processor, so that the at least one processor executes the method for processing a development machine operation task provided in the present application. The non-transitory computer-readable storage medium of the present application stores computer instructions that are used to make the computer execute the method for processing a development machine operating task provided in the present application.

As a non-transitory computer-readable storage medium, the memory 702 can be used to store non-transitory software programs, non-transitory computer executable programs and modules, such as the program instructions/modules corresponding to the method for processing a development machine operation task in the embodiment of the present application (for example, the receiving module, the processing module and the sending module shown in FIG. 5 and FIG. 6). By running non-transient software programs, instructions, and modules stored in the memory 702, the processor 701 performs various functional applications and data processing of the server, that is, the method for processing a development machine operation task in the above method embodiment is realized.

The memory 702 may include a program storage area and a data storage area. Where the program storage area may store the operating system and application programs required by at least one function; and the data storage area may store data created according to the use of processing electronic device of development machine operation task, etc. In addition, the memory 702 may include a high-speed random access memory, and may also include a non-transitory memory, such as at least one magnetic disk storage component, one flash memory component, or other non-transitory solid-state storage components. In some embodiments, the memory 702 may optionally include a memory remotely provided relative to the processor 701, and these remote memories can be connected to the electronic device for processing a development machine operation task through the network. Examples of the foregoing networks include, but are not limited to, the Internet, corporate intranets, local area networks, mobile communication networks, and combinations thereof.

The electronic device of the method for processing a development machine operation task may further include: an input apparatus 703 and an output apparatus 704. The processor 701, the memory 702, the input apparatus 703 and the output apparatus 704 may be connected by a bus or in other ways, and the bus connection is taken as an example in FIG. 8.

The input apparatus 703 can receive input digital or character information, and generate an key signal input related to the user settings and function control of the electronic device for processing a development machine operation task, for example, a touch screen, a keypad, a mouse, a trackpad, a touchpad, a pointing stick, one or more mouse buttons, a trackball, a joystick and other input apparatuses. The output apparatus 704 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various implementations of the system and technology described here can be implemented in digital electronic circuit systems, integrated circuit systems, an ASIC (application specific integrated circuit), computer hardware, firmware, software, and/or combinations thereof. These various implementations may include: implementation is performed in one or more computer programs, where the one or more computer programs may be executed and/or interpreted on a programmable system including at least one programmable processor, and the programmable processor can be a dedicated or general programmable processor, can receive data and instructions from a storage system, at least one input apparatus, and at least one output apparatus, and can transmit data and instructions to the storage system, the at least one input apparatus and the at least one output apparatus.

These computer programs (also referred to as programs, software, software applications, or code) include machine instructions for programmable processors, and can be implemented by using high-level process and/or object-oriented programming language, and/or assembly/machine language. As used herein, the terms "machine-readable medium" and "computer-readable medium" refer to any computer program product, device, and/or apparatus (for example, magnetic disk, optical disk, memory, programmable logic device (PLD)) used to provide machine instructions and/or data to a programmable processor. It includes a machine-readable medium that receives machine instructions as machine-readable signals. The term "machine-readable signal" refers to any signal used to provide machine instructions and/or data to a programmable processor.

In order to provide interaction with the user, the system and the technology described here can be implemented on a computer that has: a display apparatus used to display information to users (for example, a CRT (cathode ray tube) or LCD (liquid crystal display) monitor); and a keyboard and a pointing apparatus (for example, a mouse or a trackball), through which the user can provide the input to the computer. Other types of apparatuses can also be used to provide interaction with the user; for example, the feedback provided to the user can be any form of sensory feedback (for example, visual feedback, auditory feedback, or tactile feedback); and any form (including sound input, voice input or tactile input) can be used to receive input from the user.

The system and technology described here can be implemented in a computing system that includes a back-end component (for example, as a data server), or a computing system that includes a middleware component (for example, an application server), or a computing system that includes a front-end component (for example, a user computer with a graphical user interface or a web browser, and the user can interact with the implementation of the system and technology described here through the graphical user interface or the web browser), or a computing system that includes any combination of such back-end component, middleware component, or front-end component. The components of the system can be connected to each other through any form or medium of digital data communication (for example, a communication network). Examples of communication networks include: local area network (LAN), wide area network (WAN), and the Internet.

The computer system can include a client and a server that are generally far away from each other and usually interact with each other through a communication network. The relationship between the client and the server is generated by computer programs running on corresponding computers and having a client-server relationship with each other.

An embodiment of the present application also provides a chip which includes a processor and an interface. The interface is used to input and output data or instructions processed by the processor. The processor is used to execute the method provided in the above method embodiment. The chip can be used in a server.

The present application also provides a computer-readable storage medium, which may include: U disk, mobile hard disk, read-only memory (ROM, Read-Only Memory), random access memory (RAM, Random Access Memory), magnetic disk or optical disc and other media that can store program code. Specifically, the computer-readable storage medium stores program information that is used in the foregoing method.

An embodiment of the present application also provides a program, when executed by the processor, causing the method provided in the above method embodiment to be executed.

An embodiment of the present application also provides a program product (for example, a computer-readable storage medium) in which instructions are stored, and when running on a computer, the instructions cause the computer to execute the method provided in the foregoing method embodiment.

The technical solution according to the embodiment of the present application solves the problem of low utilization rate of the hardware of the physical machine. Compared with the prior art, the present application uses the docker container to execute the development machine operation task on the graphics processing unit (GPU), so that the operating system of a local host can be directly used, thereby improving the hardware utilization rate of the physical machine.

It should be understood that the various forms of processes shown above can be used to reorder, add or delete steps. For example, the various steps described in the present application can be performed in parallel, sequentially, or in a different order, as long as the desired result of the technical solution disclosed in the present application can be achieved, which is not limited herein.

The foregoing specific implementations do not constitute a limitation on the protection scope of the present application. Those skilled in the art should understand that various modifications, combinations, sub-combinations and substitutions can be made according to design requirements and other factors. Any modifications, equivalent replacements and improvements made within the spirit and principles of the present application shall be included in the scope of protection of the present application.

## Claims

1. A method for processing a development machine operation task, comprising:
receiving (201) a task creating request initiated by a client;
generating (202), according to the task creating request, a development machine operation task;
allocating (203) a target graphics processing unit, GPU, required for executing the development machine operation task for the development machine operation task; and
sending (204) a development machine operation task request to a master node in cluster nodes, wherein the task request is used to request executing the development machine operation task on the target GPU.

2. The method according to claim 1, wherein the allocating (203) a GPU required for executing the development machine operation task for the development machine operation task comprises:
determining (303) a user group to which the development machine operation task belongs, wherein different user groups correspond to different resource usage rights; and
allocating (304), according to a resource usage right corresponding to the user group to which the development machine operation task belongs and resources required for the development machine operation task, the target GPU required for executing the development machine operation task.

3. The method according to claim 2, wherein after the determining (303) a user group to which the development machine operation task belongs, the method further comprises:
determining (404) a resource usage quota of the user group to which the development machine operation task belongs; and
the allocating a GPU required for executing the development machine operation task to the development machine operation task comprises:
allocating the target GPU required for executing the development machine operation task, if the resource usage quota of the user group is greater than or equal to an amount of resources required for the development machine operation task; optionally,
after the allocating the target GPU required for executing the development machine operation task, the method further comprises:
subtracting (406) the amount of resources required for the development machine operation task from the resource usage quota of the user group.

4. The method according to claim 1, further comprising:
querying a resource utilization rate of the target GPU by the development machine operation task in a task database; and
sending a release task instruction to the master node, if the resource utilization rate of the target GPU by the development machine operation task is lower than a first threshold, wherein the release task instruction releases the development machine operation task on the target GPU.

5. The method according to claim 1, further comprising: querying a resource utilization rate of the target GPU in the task database;
re-allocating the target GPU for the development machine operation task, if the resource utilization rate of the target GPU is greater than a second threshold; and
sending the development machine operation task request to the master node based on a re-allocated GPU.

6. The method according to claim 1, wherein after the sending a development machine operation task request to the master node in the cluster nodes, the method further comprises:
updating a snapshot of the development machine corresponding to the development machine operation task, wherein the snapshot is logical relationship between data of the development machine.

7. The method according to claim 1, wherein after the sending a development machine operation task request to the master node in the cluster nodes, the method further comprises:
determining a block device required by the development machine operation task, wherein the block device is used to request storage resources for the development machine operation task.

8. The method according to any one of claims 1 to 7, wherein the development machine operation task comprises at least one of the following: creating the development machine, deleting the development machine, restarting the development machine, and reinstalling the development machine.

9. A method for processing a development machine operation task, comprising:
receiving a development machine operation task request sent by a task management server, wherein the task request is used to request executing the development machine operation task on a target graphics processing unit, GPU;
determining a target working node according to operating status of multiple working nodes in cluster nodes; and
scheduling a docker container of the target working node to execute the development machine operation task on the target GPU.

10. The method according to claim 9, wherein after the scheduling a docker container of the target working node to execute the development machine operation task on the target GPU, the method further comprises:
monitoring execution progress of the development machine operation task of the target working node and state of the development machine corresponding to the development machine operation task; and
sending the execution progress of the development machine operation task and the state of the development machine corresponding to the development machine operation task to task database.

11. The method according to claim 9, wherein after the scheduling a docker container of the target working node to execute the development machine operation task on the target GPU, the method further comprises:
monitoring resource utilization rate of the target GPU by the development machine operation task; and
sending the resource utilization rate of the target GPU to the task database.

12. The method according to any one of claims 9 to 11, wherein the development machine operation task comprises at least one of the following: creating the development machine, deleting the development machine, restarting the development machine, and reinstalling the development machine.

13. An electronic device, comprising:
at least one processor; and
a memory communicatively connected with the at least one processor; wherein,
the memory has stored instructions thereon, which are executed by the at least one processor, and the instructions, when executed by the at least one processor, cause the at least one processor to execute the method according to any one of claims 1 to 12.

14. A non-transitory computer-readable storage medium storing computer instructions for causing a computer to execute the method according to any one of claims 1 to 12.

15. A computer program product, comprising a computer program, when executed by a processor, implements the method according to any one of claims 1 to 12.
